(19) Europäisches Patentamt / European Patent Office / Office européen des brevets

(11) **EP 2 681 472 B1**

(12) **EUROPEAN PATENT SPECIFICATION**

(45) Date of publication and mention
of the grant of the patent:
**23.06.2021 Bulletin 2021/25**

(21) Application number: **12751725.8**

(22) Date of filing: **27.02.2012**

(51) Int Cl.:
*F16K 11/10* ^(2006.01)      *F16K 31/02* ^(2006.01)
*F16K 31/64* ^(2006.01)      *G05D 16/20* ^(2006.01)
*G05D 23/19* ^(2006.01)      *E03C 1/05* ^(2006.01)
*G05D 23/13* ^(2006.01)      *F16K 11/00* ^(2006.01)

(86) International application number:
**PCT/US2012/026678**

(87) International publication number:
**WO 2012/118721 (07.09.2012 Gazette 2012/36)**

(54) **HOUSEHOLD ELECTRONIC MIXING-VALVE DEVICE**

ELEKTRONISCHE HAUSHALTS-MISCHVENTILVORRICHTUNG

DISPOSITIF DE ROBINET MÉLANGEUR ÉLECTRONIQUE DOMESTIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.02.2011 GB 201103306**

(43) Date of publication of application:
**08.01.2014 Bulletin 2014/02**

(73) Proprietor: **Smartap A.Y Ltd**
**1923700 (IL)**

(72) Inventor: **SHAPIRA, Yuval**
**Yokneam Ilit 2068403 (IL)**

(74) Representative: **Harrison IP Limited**
**3 Ebor House**
**Millfield Lane**
**Nether Poppleton, York YO26 6QY (GB)**

(56) References cited:
**EP-A1- 2 116 655        JP-A- 2001 065 013**
**RU-A- 2007 104 996      RU-U1- 81 975**
**US-A- 4 694 512          US-A- 5 032 992**
**US-A1- 2006 231 638**

• **None**

Remarks:
The file contains technical information submitted after
the application was filed and not included in this
specification

**Description**

FIELD AND BACKGROUND OF THE INVENTION

The present invention relates to household mixing-valve devices and, more particularly, to household electronic thermostatic mixing-valve devices.

In the household, electronic thermostatic mixing valves or faucets may be used to mix relatively hot and cold water streams to provide a mixed stream of a substantially fixed temperature, by electronically adjusting one or more valve members in response to a set point, typically a set point of the user. Such mixing valves may be installed in the bathroom or shower, by way of example.

Though the design of such a device might appear to be fairly straightforward, there exist numerous and often-contradictory requirements for the design, including response time, safety, reliability, and ease of maintenance. Of course, the design is also constrained by the need to produce and provide the device at a cost that enables market penetration.

Electronic faucets typically implement a closed-loop control of some kind, which may potentially become unstable, and may result in the dispensing of dangerously-hot water to the user. It is therefore highly important to eliminate, minimize, or at least greatly reduce the possibility of such instabilities.

In domestic water systems, the task of stable control over the mixed water stream parameters is complicated by the diversity of the inlet conditions to the mixing valve. For example, the cold water temperature may vary from virtually 0°C in cold weather to as much as 30°C in hot weather. The hot water temperature may be as high as 80°C or more, e.g., when the hot water is drawn directly from a solar boiler or gas heater, and may be as low as the temperature of the cold water. Typically, the hot water temperature may lie within a rather broad range of 40°C to 75°C.

Significantly, the inlet pressures to the mixing valves may vary, or fluctuate, within a range of about 1.5 to 7 bar (gauge) depending on the supplier, the consumption, and the height of the consumer location.

Household thermostatic mixing faucets may require sub-second response times, in order to effectively respond to abrupt situations when the cold supply pressure momentarily drops, for example, after an abrupt opening of a connected, alternative or auxiliary water conduit, or due to a catastrophic failure or explosion of a cold-water pipe.

In relating to the control of thermostatic mixing faucets, some known devices utilize a single temperature sensor on the mixed flow to provide a feedback for the control loop.

Other known devices are disclosed by U.S. Patent No. 4,756,030 and German Patent Document No. DEI0241303. The flow through the two inlets is measured together with the inlet temperatures, and an additional temperature sensor may be added to measure the temperature of the mixed flow. Based on the set points, the measured inlet temperatures, and using Richmann's rule of mixing, the required flow rates through each inlet are calculated. A controller uses the measurements from the flow sensors and moves the valves in order to maintain the calculated flow.

Other known devices are disclosed by U.S. Patent Publication No. 2006/0231638 and U.S. Patent No. 4,694,512.

While various electronic thermostatic mixing faucets are known, to date, penetration into the household market has been limited. And while some technological advances have been made, the present inventor has recognized a need for further improvements in the response behavior, safety, robustness, and ease of maintenance, while provided a cost-effective design and product. The subject matter of the present disclosure and claims is aimed at fulfilling this need.

SUMMARY OF THE INVENTION

According to the present invention, there is provided a household electronic mixing-valve faucet for controlling a temperature of a mixed stream discharging from the faucet as hereinafter set forth in Claim 1 of the appended claims.

Preferred features of the invention are set forth in dependent Claims 2 to 13 of the appended claims.

BRIEF DESCRIPTION OF THE DRAWINGS

The invention is herein described, by way of example only, with reference to the accompanying drawings. With specific reference now to the drawings in detail, it is stressed that the particulars shown are by way of example and for purposes of illustrative discussion of the preferred embodiments of the present invention only, and are presented in the cause of providing what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention may be embodied in practice. Throughout the drawings, like-referenced characters are used to designate like elements.

In the drawings:

Figure 1 provides a schematic illustration of an exemplary electronic mixing valve device, according to one embodiment of the present invention;

Figure 2 provides a schematic illustration of an exemplary electronic mixing valve device, according to another embodiment of the present invention;

Figure 3 is a schematic drawing of an exemplary mixing body, according to another embodiment of the present invention;

Figure 4 is a schematic cross-sectional drawing of an exemplary motorized valve assembly, according to another embodiment of the present invention;

Figures 5A-5D are schematic cross-sectional drawings of a valve-body within a pipe, showing varying extents of opening, from fully closed to fully open;

Figure 6 provides an exemplary logical flow diagram for a controller of the electronic mixing valve device, according to another embodiment of the present invention;

Figure 7 provides a second exemplary logical flow diagram for the controller, according to another embodiment of the present invention; and

Figure 8 provides a third exemplary logical flow diagram for the controller, according to another embodiment of the present invention.

## DESCRIPTION OF THE PREFERRED EMBODIMENTS

The principles and operation of the electronic mixing-valve device according to the present invention may be better understood with reference to the drawings and the accompanying description.

Before explaining at least one embodiment of the invention in detail, it is to be understood that the invention is not limited in its application to the details of construction and the arrangement of the components set forth in the following description or illustrated in the drawings. The invention is capable of other embodiments or of being practiced or carried out in various ways. Also, it is to be understood that the phraseology and terminology employed herein is for the purpose of description and should not be regarded as limiting.

I have found problematic, the control of thermostatic faucets by utilizing a single temperature sensor on the mixed flow to provide feedback for the control loop. In this configuration, there is no one-to-one mapping between the desired temperature and the extent of opening of the valves. In addition, there exists a variable delay between a change in the extent of opening of the valves and the measured change in the temperature, depending on the unknown flowrate. Thus, there is a need to accurately measure the mixed stream temperature, which may necessitate some means of accelerating the mixing of the inlet water streams. Moreover, the uncertainty in the physical parameters of the hot and cold inlet streams results in a control system having an undetermined degree of responsivity: a given change in the position of a valve (extent of opening) may result in highly varying changes with respect to the output temperature. As a result, control loops based on a single, mixed-stream temperature sensor may not produce satisfying results in various input scenarios. A control loop that is well tuned, based on a particular set of inlet parameters, may produce high temperature overshoots, or even become unstable, under a different set of inlet conditions. The limitations of this control method may be mitigated, to a small degree, by installing additional temperature sensors on the inlets, and providing the controller with the temperature data.

In a more advanced system, the flow through the two inlets may be measured along with the inlet temperatures. A controller utilizes the measurements from the flow sensors and moves the valves in order to maintain the calculated flow, based on Richmann's rule of mixing. This control system is much superior to the previously described system based solely on temperature measurement, and may partially correct some of the deficiencies thereof. However, I have identified, in this more advanced system, significant drawbacks and sources for instability.

Perhaps most importantly, I have observed that the knowledge of the flow rates through the inlets, at a given time, does not determine the extent of opening of the valves requisite to obtain a pre-determined or set-point flow rate for the outlet stream. By way of example: at higher inlet pressures, a small change in the position of a valve may be sufficient to obtain the requisite flow rate, while at lower inlet pressures, a larger change in the valve position may be required. Such uncertainty requires to control the flow rate through each valve in a feed-back manner, when the valve position is corrected based on the difference between the required and the measured flow. This feedback control loop may suffer instabilities when the inlet pressures are substantially different from the pressures for which the loop was optimized. Thus, even in this relatively advanced control system, responsivity may be highly unpredictable.

Moreover, the use of various types of conventional flow sensors may cause different kinds of problems. Flow sensors based on turbines may promote wearing of the bearings and reduce the flowrate of the water. They may be particularly susceptible to malfunctioning due to the deposition of dirt and scale. It may be generally disadvantageous to utilize sensors having moving parts that come in direct contact with flowing water, due to extensive wearing, particularly under hard water conditions. Other types of flow sensors are based on heat dissipation from a hot element by convection. Such sensors may inherently require a hefty power consumption, which may render impractical the use of autonomous power sources such as batteries. Such sensors may also suffer from long response times. Other types of flow sensors, such as those based on vortex shedding, may also suffer from long response times.

Many types of flow sensors require laminar flow and a relatively long stretch of straight piping, which may impractically increase the dimensions of the system.

In summary, the introduction of various types of flow sensors into an electronic mixing-valve device may result in a shorter device lifespan, require large device dimensions, and achieve long response times. Moreover, the techno-economic viability of the electronic mixing-valve device may be greatly constrained by the frugality of household consumers.

Instead of flow measurements, the present invention uses pressure measurements as input to the control loop. To this end, pressure sensors may advantageously be disposed both upstream and downstream of each powered valve. I have found that pressure sensors may have appreciably improved response time relative to flow sensors, at least in part because pressure sensors measure changes in force and not the integrals thereof. I have further found that by pre-calibrating valve hydraulic characteristics as a function of pressure, and by inputting the pressure differentials between upstream and downstream sensors to the controller, the control algorithm may accurately calculate or determine (from those pressure differentials, typically directly) the required degree of opening of the powered valves, rather than the required flow rate through each valve, as taught by the prior art. Therefore, this arrangement obviates the need for a flow feedback loop through each valve and hence improves the stability of the system for any set of varying pressure conditions. Thus, the device and method of the present invention completely and inherently compensate for uncertainties in the system due to a wide span of inlet conditions, resulting in a robust, closed-loop system that may be free or substantially free of stability issues.

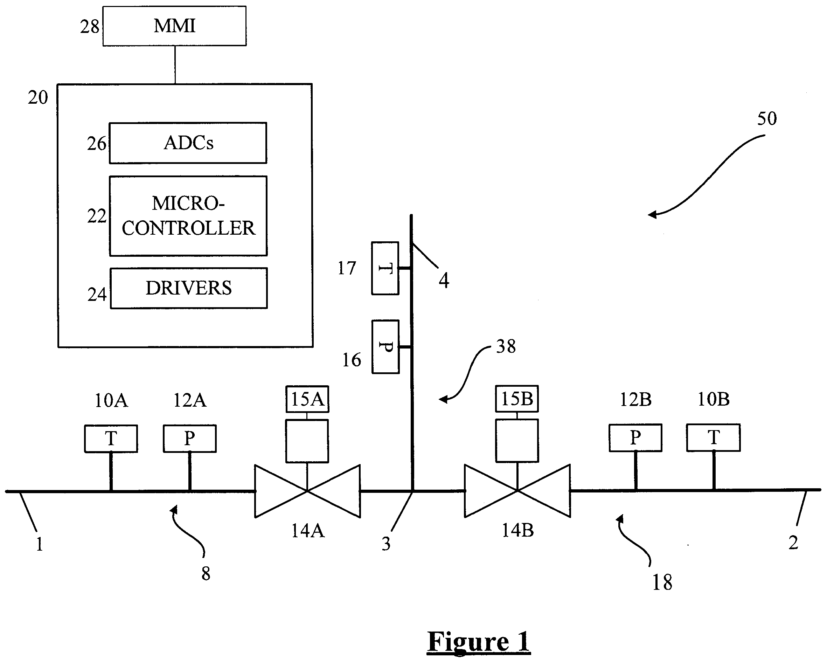

Referring now to the drawings, Figure 1 provides a schematic illustration of an exemplary electronic thermostatic mixing valve faucet or device **50,** according to one embodiment of the present invention. Thermostatic faucet **50** includes a hot water inlet **1,** adapted to connect to a hot water source (not shown), and fluidly connected to a hot water flowpath **8,** and a cold water inlet **2,** adapted to connect to a cold water source (not shown), and fluidly connected to a cold water flowpath **18.** Flowpaths **8** and **18** converge at a mixing junction **3** to produce a mixed water stream, which flows through a mixed stream water flowpath **38** before being discharged from faucet **50** via a mixed stream or faucet outlet **4.**

Thermostatic faucet **50** may include a first powered valve 14A fluidly connected to hot water flowpath **8,** and a second powered valve **14B** fluidly connected to cold water flowpath **18.** Associated with powered valves **14A, 14B** is at least one extent of opening evaluator or arrangement **15A, 15B** adapted to measure, monitor or evaluate an extent of opening of each of powered valves **14A, 14B.** Typically, each powered valve **14A, 14B** is equipped with a respective arrangement **15A, 15B,** each of which is operative to measure a position of its respective valve **14A, 14B** with respect to a fully closed position thereof.

Hot water flowpath **8** of faucet **50** includes a first temperature sensor **10A** and at least a first pressure sensor **12A,** associated with a body of faucet **50,** and operative to sense, respectively, a temperature and a pressure of a first fluid within hot water flowpath **8.** First pressure sensor **12A** may advantageously be disposed upstream of powered valve **14A.** Similarly, cold water flowpath **18** of faucet **50** further includes a second temperature sensor **10B** and at least a second pressure sensor **12B,** associated with a body of faucet **50,** and operative to sense, respectively, a temperature and a pressure of a second fluid within cold water flowpath **18.** Second pressure sensor **12B** may advantageously be disposed upstream of powered valve **14B.**

Thermostatic faucet **50** may include a downstream pressure sensor **16,** associated with mixed stream water flowpath **38** within faucet **50,** and operative to sense a pressure of the mixed water stream flowing within mixed stream water flowpath **38.** Thermostatic faucet **50** may include a temperature sensor **17,** disposed downstream with respect to junction **3,** and operative to sense a temperature of the mixed water stream flowing within flowpath **38.**

Temperature sensors **10A, 10B,** and **17,** and pressure sensors **12A, 12B,** and **16,** may be operative to provide temperature and pressure information, respectively to a controller **22.** Powered valves **14A, 14B** are responsive to controller **22.** The operation of controller **22** will be described in greater depth hereinbelow.

Thermostatic faucet **50** may include an electronic board **20** for housing controller (typically a micro-controller) **22,** and a plurality of analog-to-digital converters (ADCs) such as ADC **26.** Each ADC **26** may be disposed within controller **22.** Typically, each ADC **26** is adapted to receive signals from the various sensors, to sample them and to convert into digital signals.

Thermostatic faucet **50** may further include at least two drivers such as driver **24,** each driver **24** operative to drive one of powered valves **14A** and **14B.** In an exemplary case in which valves **14A** and **14B** are powered by DC motors, each driver **24** may advantageously be an H-bridge.

A man-machine-interface (MMI) module **28** may be used to input setpoints and/or display parameters relating to properties such as mixed flow properties. MMI module **28** may be connected by wire or wirelessly to board **20.**

It will be appreciated by one of ordinary skill in the art that the geometry of the powered valve, along with the drive method, may determine the type, design and configuration of extent of opening evaluators **15A** and **15B.** For a valve controlled by a rotating shaft, by way of example, a rotating motor may be connected to provide the means for electronic control over the valve. The degree of opening of the valve may then be determined by the rotational angle of the valve shaft. When a stepper motor drives the valve, the counter that counts the number of the commanded steps can serve as a main component of arrangement or evaluators **15A** and **15B**. In the case of a DC motor, a measurement of the back EMF can be used to calculate the motor speed, and by integration - the motor rotation angle (http://www.acroname.com/robotics/info/articles/back-emf/back-emf.html). In this case, evaluators **15A** and **15B** would encapsulate the motor driver together with a software routine and an ADC converter for measuring the voltage across the motor windings. In another embodiment, arrangement **15A** and **15B** may include a potentiometer and an ADC converter. By measuring the resistance change of the potentiometers, the angular movement of the valve shaft may be deduced. In yet another embodiment, opto-couple or Hall-effect encoders can be used to calculate the angular movement of the valve shaft.

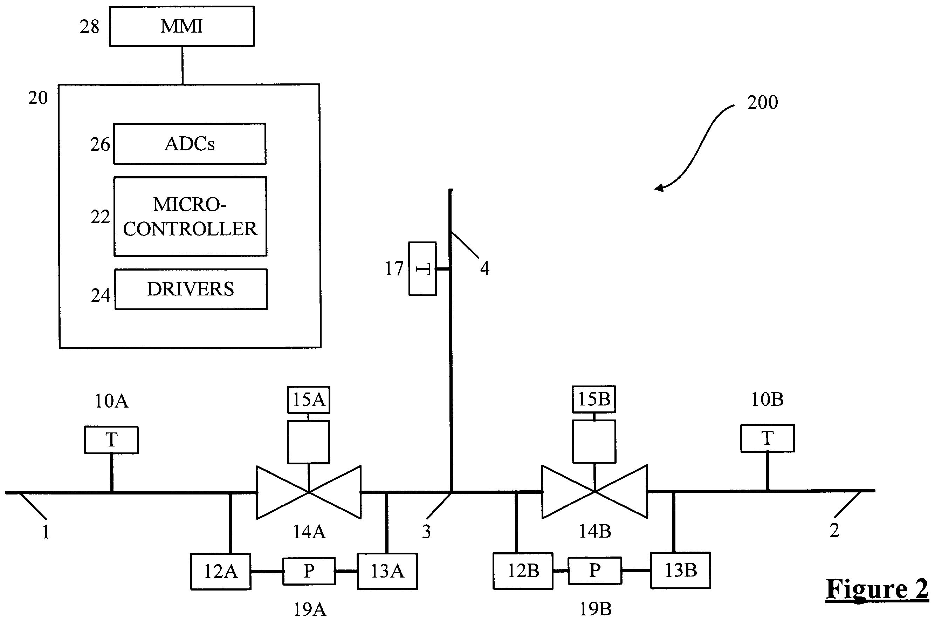

In another exemplary embodiment of a thermostatic faucet or device **200** according to the present invention, shown in Figure 2, a second hot water flowpath pressure sensor **13A** may be disposed along hot water flowpath **8,** downstream with respect to powered valve **14A**. Similarly, a second cold water flowpath pressure sensor **13B** may be disposed along cold water flowpath **18,** downstream with respect to powered valve **14B**. It may be particularly advantageous to utilize a single, differential pressure sensor unit **19A** that is operative to measure a differential between the upstream pressure and the downstream pressure of powered valve **14A**. Similarly, a differential pressure sensor unit **19B** may be used to measure a differential between the upstream pressure and the downstream pressure of powered valve **14B**. In this case, pressure sensors **12A, 13A** may essentially be first and second components of differential pressure sensor unit **19A,** and pressure sensors **12B, 13B** may essentially be first and second components of differential pressure sensor differential pressure sensor unit **19B.**

The above arrangement may obviate the need for pressure sensor **16** (shown in Figure 1). As above, temperature sensor **17** is an optional component of the device.

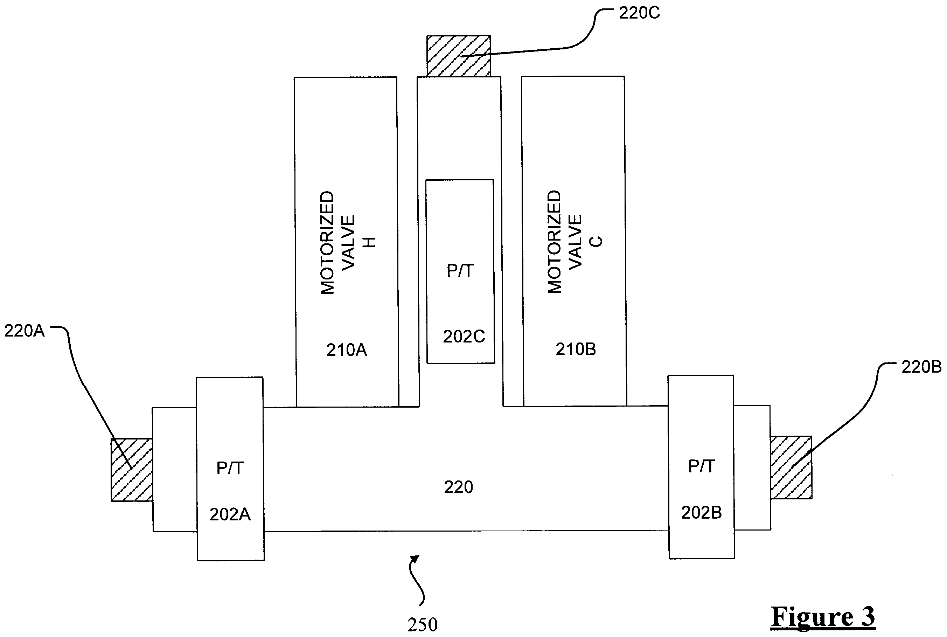

Figure 3 is a simplified mechanical drawing of an exemplary mixing body **250,** according to another embodiment of the present invention. This embodiment represents a specific hardware design based electronic faucet, based on the scheme provided in Figure 1.

Mixing body **250** includes a housing **220** having a hot water inlet **220A,** a cold water inlet **220B** and a mixed water outlet **220C.** Mixing body **250** further includes combined pressure/temperature sensors **202A, 202B** and **202C,** adapted to measure the temperature and the pressure of the hot, the cold and mixed water streams, respectively. Sensor units such as RPS 0-6 sensor units (Grundfos Holding A/S, Denmark) may be suitable.

Mixing body **250** further includes motorized valve units **210A** and **210B,** which are operative to control the water flows through the hot and the cold inlets, respectively, based on the control signals from drivers **24** (shown in Figure 1) associated with controller **20.** Motorized valves or valve assemblies **210A** and **210B** may be connected to housing **220** by means of complementary connectors such as complementary threaded surfaces (e.g., using standard threading). Thus, each of valves **210A** and **210B** may be an interchangeable unit that may be reversibly installed and reversibly removed or uncoupled from housing **220** in a simple and straightforward manner, for maintenance or replacement purposes.

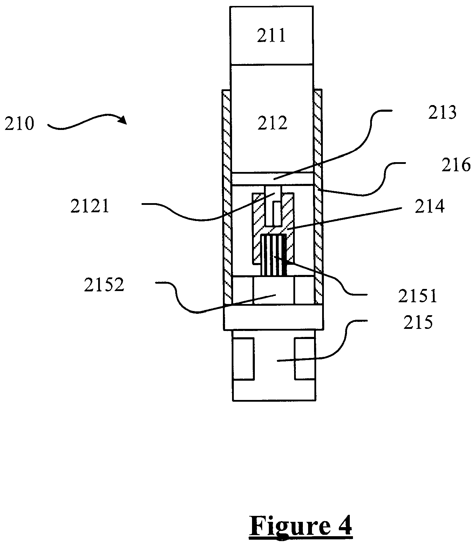

Figure 4 is a schematic cross-sectional drawing of an exemplary motorized valve assembly **210,** according to another embodiment of the present invention. Motorized valve assembly **210** may include a direct current (DC) motor **211,** a gearbox **212,** a hollow-shaft potentiometer **213** such as RH24PC by MegAuto KG (Putzbrunn-Munich, Germany), mechanically connected to a gear output shaft **2121** of motor **211,** and a headwork valve **215,** such as the Lifetime F118 ceramic headwork valve of Fluehs Drehtechnik GMBH (Luedenscheid-Bruegge, Germany). By rotating a valve shaft **2151** of valve **215** relative to a valve body **2152,** the flow through valve **215** may be controlled. Gear output shaft **2121** may be connected to valve shaft **2151** by means of a coupling module **214.** Motor **211,** gearbox **212** and potentiometer **213** are advantageously interconnected whereby a voltage drop on the contacts (not shown) of motor **211** results in a rotation of shaft **2121** with respect to a body of gearbox **212,** and to a corresponding change in the resistance of potentiometer **213,** which is proportional to the angular change in shaft **2121.** Coupling module **214** may be adapted to inhibit relative angular movement between shaft **2121** and valve shaft **2151.** Moreover, valve body **2152** and gearbox **212** may be rigidly connected by means of a housing **216,** whereby relative movement between gearbox **212** and valve body **2152** is substantially inhibited.

In motorized valve assembly **210,** a bi-directional control over the extent of opening ($\theta$) of valve **215** may be achieved by connecting the output of driver **24** (shown in Figures 1 and 2) to the electric contacts of motor **211,** and $\theta$ may be monitored by measuring the rotation-dependent resistance of potentiometer **213.**

With reference now to Figure 1 as well, the user may set the desired temperature and flow of the mixed stream by means of MMI module **28.** Given these set-points and based on the signals from the ADCs **26,** controller **20** is designed and configured to send commands to the valve drivers **24** whereby the difference between the actual temperature of the mixed stream and the set-point temperature is kept within a particular or predetermined error margin. Subject to this constraint, the difference between the mixed stream flow and the set-point flow may then be minimized.

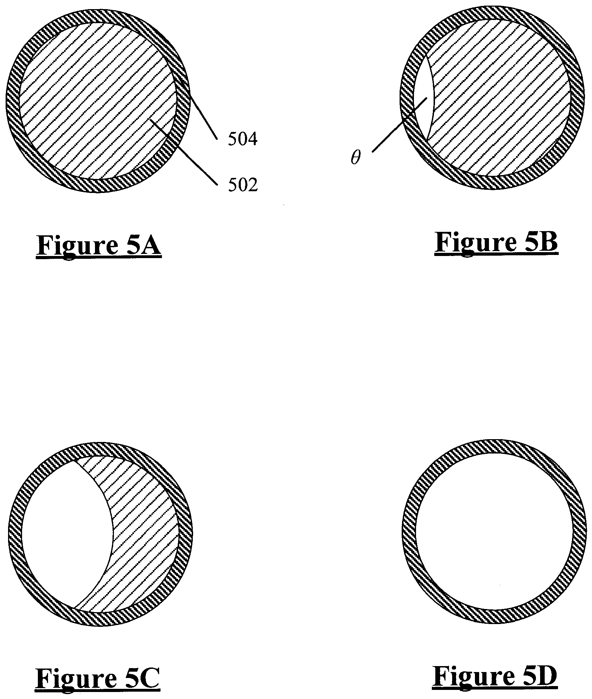

Figures 5A-5D are schematic cross-sectional drawings of a valve body **502** within a pipe **504,** showing varying extents of opening ($\theta$) for an exemplary ball-valve. In the cross-sectional drawing of Figure 5A, pipe **504** is completely closed by valve-body **502,** which may correspond to a $\theta$ of zero. In Figure 5B, $\theta$ assumes a positive value; as valve body **502** assumes a smaller cross-section of pipe **504,** $\theta$ increases (Figure 5C), reaching some maximum value. In Figure 5D, that maximum value corresponds to pipe **504** having a completely open cross-section.

As a valve handle (not shown) is rotated, valve body **502** may exhibit different extents of opening inside the pipe for flow of the water therethrough. Thus, for different degrees or extents of opening, different flow rates may be obtained.

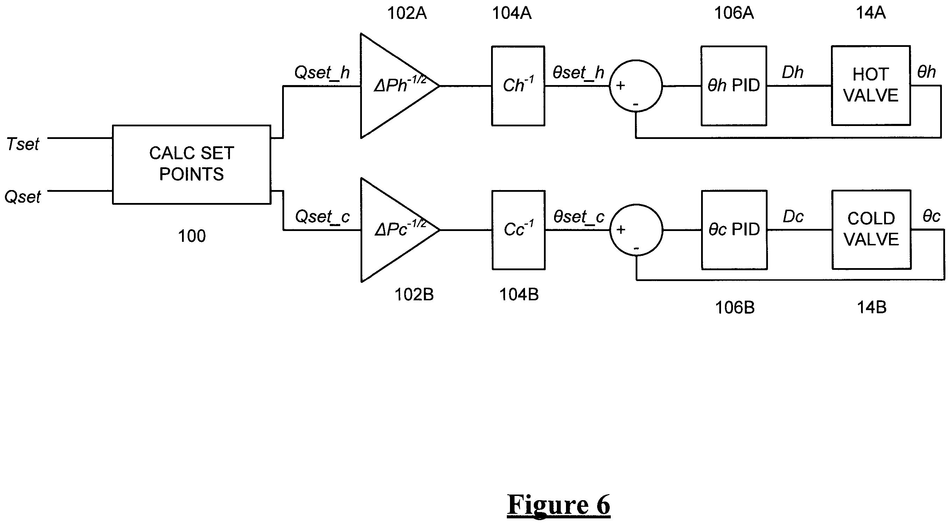

Figure 6 provides an exemplary logical flow diagram for controller **22,** according to another embodiment of the present invention. Definitions of various terms are provided below:

$Qh$ - flowrate through hot inlet **1**
$Qc$ - flowrate through cold inlet **2**
$Qm$ - flowrate through mixed outlet **4**
$Th$ - temperature of the stream in hot inlet **1** (hot water flowpath **8**)
$Tc$ - temperature of the stream in cold inlet **2** (cold water flowpath **18**)
$Tm\_calc$ - calculated temperature of the stream discharged via mixed outlet **4**
$Tm\_meas$ - actual temperature of the stream discharged via mixed outlet **4,** as measured by sensor **17**
$Ph$ - pressure upstream of valve **14A** (gauge pressure)
$Pc$ - pressure upstream of valve **14B** (gauge pressure)
$Pi$ - $Pc$ or $Ph$
$Pmix$ - pressure downstream of valves **14A** and **14B** (gauge pressure)
$\Delta Ph = Ph - Pmix$ - pressure drop over valve **14A**
$\Delta Pc = Pc - Pmix$ - pressure drop over valve **14B**
$\theta h$ - extent of opening of valve **14A** as calculated by evaluator **15A**
$\theta c$ - extent of opening of valve **14B** as calculated by evaluator **15B**
$Ch(\theta h)$ - valve coefficient of valve **14A**
$Cc(\theta c)$ - valve coefficient of valve **14B**
$Ci$ - $Cc$ or $Ch$
$Dh$ - drive signal to valve **14A**
$Dc$ - drive signal to valve **14B**
$Tset$ - temperature setpoint
$Qset$ - flowrate setpoint
$\theta set$ - extent of opening setpoint

We assume the following:

Assumption (1) No heat is lost in the mixing valve. Then, the heat conservation equation reads:

$$Tm\_calc = \frac{Tc\,Qc + Th\,Qh}{(Qc + Qh)} \qquad (1)$$

Assumption (2) No water is lost in the system. Thus, the conservation of mass reads:

$$Qm = Qc + Qh \qquad (2)$$

Assumption (3) The flow through each valve is below the chocked flow regime of the valve. Thus, the following equation holds:

$$Qc = Cc(\theta c)\sqrt{\Delta Pc}$$
$$\qquad (3)$$
$$Qh = Ch(\theta h)\sqrt{\Delta Ph}$$

Assumption (4) $Ch$ and $Cc$ are monotonically increasing functions of $\theta h$ and $\theta c$ respectively, or at least there are regions $\theta h \in [\theta min\_h,\ \theta max\_h]$, $\theta c \in [\theta min\_c,\ \theta max\_c]$ in which this assumption holds.

Given $Tset$ and $Qset$, the desired flows through the hot and the cold inlets, $Qseth$ and $Qset\_c,$ respectively, may be calculated, based on Equations (1) and (2), in a set-point calculation block **100.** The desired extents of opening of the hot and cold valves, $\theta set\_h$ and $\theta set\_c$, respectively, are calculated by calculation blocks **102A, 104A, 102B** and **104B,** according to Equation (3) and Assumption (4):

$$\theta set\_c = Cc^{-1}\left( Qset\_c \middle/ \sqrt{\Delta Pc} \right)$$

(4)

$$\theta set\_h = Ch^{-1}\left( Qset\_h \middle/ \sqrt{\Delta Ph} \right)$$

wherein $Ci^{-1}(x)$ is the inverse function of the function $Ci(x)$, such that $Ci^{-1}(Ci(x)) = x$, where i stands for c or h.

Thus, given the desired flow parameters $Tset$ and $Qset$, the measured inlets temperatures $Tc$ and $Th$, and the measured pressure differentials (drops) $\Delta Pc$ and $\Delta Ph$, the required opening angles of the valves are calculated deterministically in a feed-forward manner, through mathematical formulas (1)-(4). As long as the assumptions (1)-(4) hold, the obtained calculation yields a single solution such, that if the valves are placed according to this solution, the outlet flow parameters will be equal to the desired flow parameters, with no need to utilize a feedback control based on flow rates through one or both inlets, or outlet temperature.

We have found that, with regard to pressure measurements, it is generally insufficient to measure the inlet pressures alone. It may be advantageous to measure, in addition, the mixed water pressure. For example, the inventive electronic mixing-valve faucet may be connected to a flow restriction element that increases the pressure at the outlet of the faucet. This flow restriction element may be, by way of example, a shower head or a diverter valve. The magnitude of the (increased) pressure at the mixing valve outlet ($Pmix$) will be higher for higher flow rates, because the pressure-drop over the restrictive element gets higher as the flow rate therethrough increases.

When the flow restriction element is present, the terms $\sqrt{\Delta Pi} = \sqrt{Pi - Pmix}$ in Eqs. (4) may be substantially different from the term $\sqrt{Pi}$, especially for high flow rates. Hence, using the term $\sqrt{Pi}$ in Eqs. (4) may cause significant errors in delivered flow rates, and corresponding error in the outlet temperature (through Eq. (1)), especially for high flow rates. Although the magnitude of the error may be reduced by limiting the mixed flow rate, this procedure may unnecessarily and disadvantageously limit the flow through the faucet.

We have found that, in general, the dependence of $Ci$ on the opening angle may be non-linear. For example, in the case of the above-referenced F118 ceramic headwork valve, the least-square linear fit of $Ci$ vs. $\theta$ function produced significant errors. For instance, at an opening of 70°, the flow rate estimation error due to linearization alone (without taking into consideration the errors in pressure sensors, positioning sensor and calibration) is $\frac{\delta Q}{Q} = 18\%$, while at an opening of 50°, the flow rate estimation error due to linearization alone is $\frac{\delta Q}{Q} = -16\%$. Failing to converge towards the desired flow rate will inevitably cause the actual outlet temperature to disadvantageously diverge from the value predicted by Eq. (1). By linearizing Eq. (1), the temperature error due to errors in actual flow rates is obtained:

$$\delta T = \Delta T_{HC} \frac{Q_C \delta Q_H - Q_H \delta Q_C}{(Q_C + Q_H)^2},$$

where $\Delta T_{HC}$ is the difference between the hot and the cold inlet temperatures. Let us assume, by way of example, the following parameters:

$T_H$ = 63°, $T_C$ = 13⁰, $T_{SET}$ = 38°, $Q_{SET}$ = 10 [1/min]
$P_H$ = 0.9, $P_C$ = 5.8, $P_{MIX} \cong 0$ [bar]

According to the procedure described above, the required flow rates and valve coefficients in these conditions are $Q_H$ = $Q_C$ = 5 1/min, $C_{VH}$ = 5.24, $C_{VC}$ = 2.1. The resulting opening angles for a linearized model are $\theta_H$ = 70°, $\theta_C$ =

50°. Hence $\dfrac{\delta Q_H}{Q_H} = -\dfrac{\delta Q_C}{Q_C} \cong 17\% \rightarrow \delta T = 4.3^0.$ This means that instead of obtaining the mixed output stream temperature at a close to comfortable 38°, the actual mixed temperature becomes uncomfortably hot (42.3°). The position of each of valves **14A, 14B** may be controlled using PID controllers **106A** and **106B,** respectively. PID controllers **106A** and **106B** drive their corresponding valves **14A, 14B** by means of drivers **24** (shown and described hereinabove) and based on the control variables.

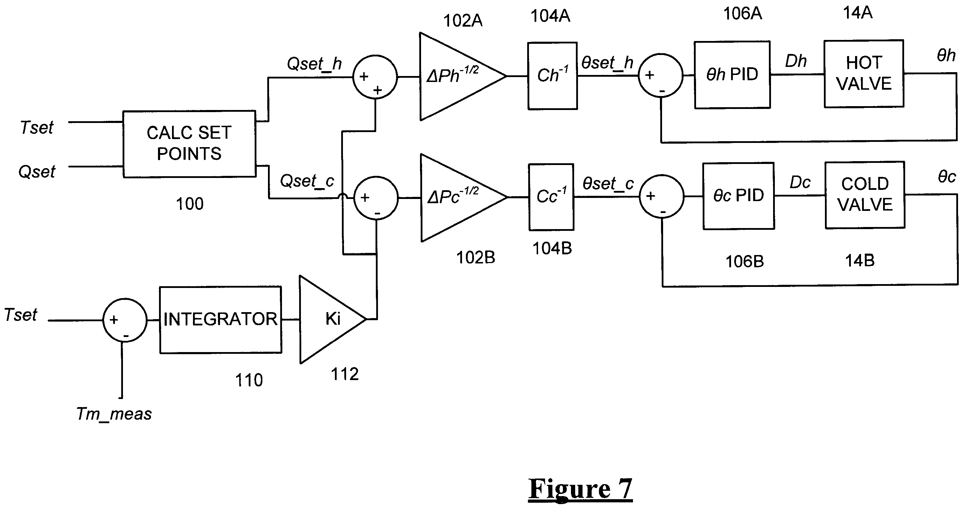

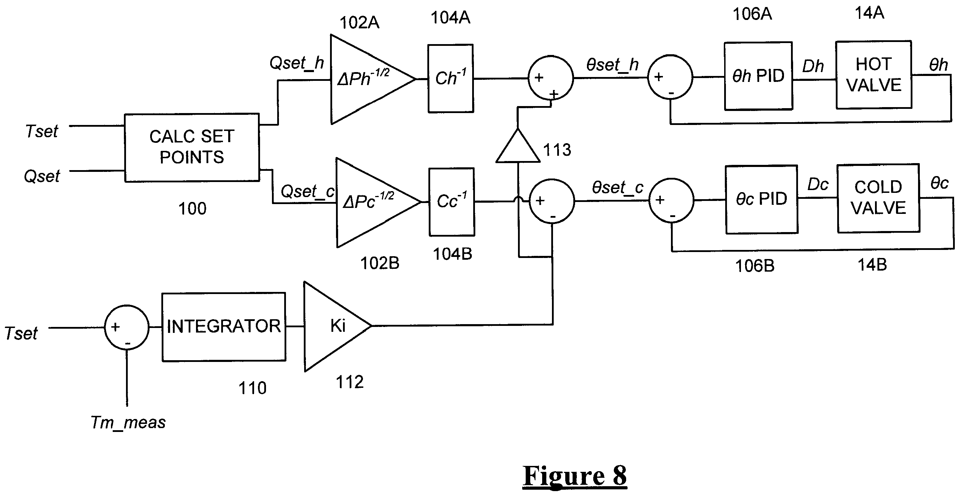

Due to errors in pressure measurements, temperature measurements of the inlets, errors during the calibration of functions *Cc* and *Ch,* and errors in *θh* and/or *θc,* the actual temperature at the outlet *Tm_meas* can be different from the calculated mixed stream temperature *Tm_calc.* As a means of compensation, another embodiment of controller **22,** described in Figure 7, integrates the temperature error by block **110,** multiplies it by an integrator gain **112** and adds the resulting value, with different signs, to the calculated set points *Qset_h* and *Qset_c.* A similar control configuration (and method) is provided in Figure 8. However, an output of integrator gain **112** is provided to the basic control loop after blocks **104A** and **104B.** To allow further versatility, for example, when powered valves **14A** and **14B** are of different types, an additional gain **113** may be incorporated in the control scheme. By way of example, if powered valve **14A** has a range of 180 degrees, and powered valve **14B** has a range of 90 degrees, a movement of two degrees in the 180 degree valve may roughly correspond to a movement of one degree in the 90 degree valve, and gain **113** would be 2.0.

While those of ordinary skill in the art may appreciate that there exist various methods of calibrating a valve to determine the valve constant, the calibration procedure of the function *C* may readily be performed as follows:

a) for each degree of opening $\theta$, apply different pressures drops $\Delta P$ over the valve to be calibrated, by, for instance, limiting the flow by means of another valve located upstream or downstream of the valve to be calibrated;
b) for $\Delta P$ set, measure the $\Delta P$ and the flow rate through the valve to be calibrated, *Q*;

c) plot the points $(\sqrt{\Delta P}, Q);$

d) find the best linear trendline among the lines $Q = m \times \sqrt{\Delta P}$ that minimizes the root-mean-square error between the line and the measured points $(\sqrt{\Delta P}, Q),$ wherein *m* is the slope of the line; and
e) determine $C(\theta)$ = *m.*

As used herein, the term "pressure sensor" is meant to include sensors measuring absolute pressure or relative (or differential) pressure. The relative pressure may be with respect to the atmosphere, to another particular or pre-determined pressure, or to another pressure within the thermostatic mixing-valve device or within any of the water flow paths.

As used herein, the term "another pressure sensor", with respect to a first pressure sensor and a second pressure sensor, refers either to at least one of the first and second pressure sensors, or to an additional pressure sensor (such as a third pressure sensor), distinct from the first and second pressure sensors.

As used herein, the term "discrete pressure information" refers to absolute pressure information or to pressure information that is relative to the atmosphere or to a standard that is independent of pressure within the thermostatic mixing-valve device or within any of the water flow paths.

As used herein, the term "household electronic mixing-valve faucet", and the like, refers to a faucet adapted for installation into home-type water systems having a first pipe providing water from a hot-water supply such as a boiler, and a second pipe providing water from a cold-water supply such as a main cold water supply line (e.g., connected with a municipal water network), within a home, the faucet adapted for use in conjunction with a sink, such as a kitchen or bathroom sink, a bath, a shower stall, or the like. The term "household" is specifically meant to include apartment buildings, hotels, hospitals, and other such consumer-based facilities having sinks, baths, shower stalls, etc.

It will be appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable sub-combination.

**Claims**

1.  A household electronic mixing-valve faucet (50) for controlling a temperature of a mixed stream discharging from the faucet, the faucet comprising:

(a) a faucet body including:

(i) a hot water inlet (1), adapted to connect to a hot water source, and fluidly connected to a hot water flowpath (8); and
(ii) a cold water inlet (2), adapted to connect to a cold water source, and fluidly connected to a cold water flowpath (18), said inlets fluidly connecting at a junction (3) on said faucet body; and
(iii) a faucet outlet (4), adapted to deliver the mixed stream received from said water flowpaths (8,18), via said junction (3);

(b) a controller (22);
(c) a first powered valve (14A) fluidly connected to said hot water flowpath (8), said first valve (14A) responsive to said controller (22);
(d) a second powered valve (14B) fluidly connected to said cold water flowpath (18), said second valve (14B) responsive to said controller;
(e) at least one arrangement (15A, 15B) adapted to determine an extent of opening of said first powered valve and an extent of opening of said second powered valve;
(f) a first temperature sensor (10A) and a second temperature (10B) sensor, said sensors associated with said faucet body to sense, respectively, a first temperature of fluid within said hot water flowpath, upstream of said first powered valve (14A) and a second temperature of fluid within said cold water flowpath (18), upstream of said second powered valve (14B);
(g) at least a first component of a first pressure sensor (12A) and at least a first component of a second pressure sensor (12B), said components (12A,12B) of said sensors associated with said faucet body, said first component of said first sensor serving to sense fluid pressure within said hot water flowpath (8), upstream of said first powered valve (14A), said component (12B) of said second sensor serving to sense fluid pressure within said cold water flowpath (18), upstream of said second powered valve (14B); and
(h) at least one additional component of another pressure sensor (16; 13A,13B), said component disposed downstream with respect to said powered valves (14A,14B), said controller adapted to receive:

information, from said arrangement (15A,15B), pertaining to said extent of opening of each of said powered valves;
temperature information from said temperature sensors (10A, 10B) ; and
pressure information from all of said pressure sensors (12A,12B,13A,13B,16)
**characterised in that**
said controller (22) has a calibrated relationship relating a flowrate of fluid through said hot water flowpath (8) to said extent of opening of said first powered valve (14A), as a function of a first pressure differential, and a calibrated relationship relating a flowrate of fluid through said cold water flowpath (18) to said extent of opening of said second powered valve (14B), as a function of a second pressure differential,
during operation of the household electronic mixing-valve faucet, said controller is adapted to obtain, based on said pressure information, an actual first pressure differential between a pressure of said fluid within said hot water flowpath and a pressure downstream of said first valve, and an actual second pressure differential between a pressure of said fluid within said cold water flowpath and a pressure downstream of said second valve, and
said controller is further adapted

(i) to control said valves to set the extent of opening of each valve, on the basis of said temperature information and in dependence upon the actual pressure differentials using said calibrated relationships to achieve a set-point temperature of the mixed stream, and
(ii) to control said valves to set the extent of opening of each valve, on the basis of said temperature information and in dependence upon the actual pressure differentials to achieve a set-point flow rate of the mixed stream,

any difference between an actual temperature of the mixed stream and said set-point temperature, being kept within a particular range.

2. The household electronic mixing-valve faucet of claim 1, wherein said controller is adapted to control said powered valves (14A, 14B) based on said temperature information and said actual pressure differentials, whereby a difference between an actual flowrate of the mixed stream and said set-point flowrate, is kept within a second particular range.

3. The household electronic mixing-valve faucet of claim 1 or claim 2, wherein said another pressure sensor (13A) is disposed between said first powered valve (14A) and said junction (3).

4. The household electronic mixing-valve faucet of claim 1 or claim 2, wherein said another pressure sensor (13B) is disposed between said second powered valve (14B) and said junction (3).

5. The household electronic mixing-valve faucet of claim 1 or claim 2, wherein said first pressure sensor is a first differential pressure sensor including said first component (12A) of said first pressure sensor and said additional component (13A) of said another pressure sensor.

6. The household electronic mixing-valve faucet of claim 1 or claim 2, wherein said second pressure sensor is a second differential pressure sensor including said first component (12B) of said second pressure sensor and said additional component (13B) of said another pressure sensor.

7. The household electronic mixing-valve faucet of claim 1 or claim 2, wherein said controller includes at least one driver (24) adapted to drive said powered valves.

8. The household electronic mixing-valve faucet of claim 1 or claim 2, further comprising a man-machine interface (MMI) module (28) operatively connected to said controller.

9. The household electronic mixing-valve faucet of claim 1 or claim 2, wherein at least one of said powered valves (14A, 14B) is driven by a stepper motor, and wherein said arrangement (15A, 15B) includes a counter associated with said stepper motor, said counter adapted to count a number of steps of said stepper motor, and wherein said controller is adapted to utilize said number of steps to determine said extent of opening of at least one of said powered valves.

10. The household electronic mixing-valve faucet of claim 1 or claim 2, further comprising a third temperature sensor (17), disposed downstream from said junction (3).

11. The household electronic mixing-valve faucet of claim 10, said controller adapted to modify said required extent of openings based on an input from said third temperature sensor (17).

12. The household electronic mixing-valve faucet of claim 10 or claim 11, said controller adapted to control said powered valves based on a feed forward control scheme and a feed back control scheme, said feed forward control scheme and said feed back control scheme operating at least partially in parallel.

13. The household electronic mixing-valve faucet of claim 1 or claim 2, said controller adapted to control said powered valves based on said temperature information and said actual pressure differentials, whereby an actual flowrate of the mixed stream is maintained above 20 1/min and a pressure of the mixed stream is at least 0.5 bar.

**Patentansprüche**

1. Elektronischer Haushaltsmischventilwasserhahn (50) zum Steuern einer Temperatur eines gemischten Stroms, der aus dem Wasserhahn austritt, wobei der Wasserhahn Folgendes umfasst:

   (a) einen Wasserhahnkörper, beinhaltend:

      (i) einen Warmwassereinlass (1), der ausgelegt ist, um sich mit einer Warmwasserquelle zu verbinden, und mit einem Warmwasserströmungsweg (8) fluidisch verbunden ist; und
      (ii) einen Kaltwassereinlass (2), der ausgelegt ist, um sich mit einer Kaltwasserquelle zu verbinden, und mit einem Kaltwasserströmungsweg (18) fluidisch verbunden ist, wobei sich die Einlässe an einer Verbindungsstelle (3) an dem Wasserhahnkörper fluidisch verbinden; und
      (iii) einen Wasserhahnauslass (4), der ausgelegt ist, um den gemischten Strom, der von den Wasserströmungswegen (8, 18) empfangen wird, über die Verbindungsstelle (3) zu liefern;

(b) eine Steuerung (22);

(c) ein erstes angetriebenes Ventil (14A), das mit dem Warmwasserströmungsweg (8) fluidisch verbunden ist, wobei das erste Ventil (14A) auf die Steuerung (22) reagiert;

(d) ein zweites angetriebenes Ventil (14B), das mit dem Kaltwasserströmungsweg (18) fluidisch verbunden ist, wobei das zweite Ventil (14B) auf die Steuerung reagiert;

(e) zumindest eine Anordnung (15A, 15B), die ausgelegt ist, um ein Ausmaß der Öffnung des ersten angetriebenen Ventils und ein Ausmaß der Öffnung des zweiten angetriebenen Ventils zu bestimmen;

(f) einen ersten Temperatursensor (10A) und einen zweiten Temperatursensor (10B), wobei die Sensoren dem Wasserhahnkörper zugeordnet sind, um jeweils eine erste Temperatur von Fluid innerhalb des Warmwasserströmungsweges stromaufwärts des ersten angetriebenen Ventils (14A) und eine zweite Temperatur von Fluid innerhalb des Kaltwasserströmungsweges (18) stromaufwärts des zweiten angetriebenen Ventils (14B) zu erfassen;

(g) zumindest eine erste Komponente eines ersten Drucksensors (12A) und zumindest eine erste Komponente eines zweiten Drucksensors (12B), wobei die Komponenten (12A, 12B) der Sensoren dem Wasserhahnkörper zugeordnet sind, wobei die erste Komponente des ersten Sensors dazu dient, Fluiddruck innerhalb des Warmwasserströmungsweges (8) stromaufwärts des ersten angetriebenen Ventils (14A) zu erfassen, wobei die Komponente (12B) des zweiten Sensors dazu dient, Fluiddruck innerhalb des Kaltwasserströmungsweges (18) stromaufwärts des zweiten angetriebenen Ventils (14B) zu erfassen; und

(h) zumindest eine zusätzliche Komponente eines weiteren Drucksensors (16; 13A, 13B), wobei die Komponente stromabwärts in Bezug auf die angetriebenen Ventile (14A, 14B) angeordnet ist, wobei die Steuerung ausgelegt ist, um Folgendes zu empfangen:

Informationen von der Anordnung (15A, 15B), die sich auf das Ausmaß der Öffnung von jedem der angetriebenen Ventile beziehen;
Temperaturinformationen von den Temperatursensoren (10A, 10B); und
Druckinformationen von allen der Drucksensoren (12A, 12B, 13A, 13B, 16),
**dadurch gekennzeichnet, dass**
die Steuerung (22) eine kalibrierte Beziehung, die eine Strömungsrate von Fluid durch den Warmwasserströmungsweg (8) auf das Ausmaß der Öffnung des ersten angetriebenen Ventils (14A) in Abhängigkeit von einer ersten Druckdifferenz bezieht, und eine kalibrierte Beziehung aufweist, die eine Strömungsrate von Fluid durch den Kaltwasserströmungsweg (18) auf das Ausmaß der Öffnung des zweiten angetriebenen Ventils (14B) in Abhängigkeit von einer zweiten Druckdifferenz bezieht,
während des Betriebs des elektronischen Haushaltsmischventilwasserhahns die Steuerung ausgelegt ist, um basierend auf den Druckinformationen eine tatsächliche erste Druckdifferenz zwischen einem Druck des Fluids innerhalb des Warmwasserströmungsweges und einem Druck stromabwärts des ersten Ventils, und eine tatsächliche zweite Druckdifferenz zwischen einem Druck des Fluids innerhalb des Kaltwasserströmungsweges und einem Druck stromabwärts des zweiten Ventils zu erhalten, und
die Steuerung ferner ausgelegt ist,

(i) um die Ventile zu steuern, um das Ausmaß der Öffnung jedes Ventils auf der Basis der Temperaturinformationen und in Abhängigkeit von den tatsächlichen Druckdifferenzen unter Verwendung der kalibrierten Beziehungen festzulegen, um eine Solltemperatur des gemischten Stroms zu erreichen, und
(ii) um die Ventile zu steuern, um das Ausmaß der Öffnung jedes Ventils auf der Basis der Temperaturinformationen und in Abhängigkeit von den tatsächlichen Druckdifferenzen festzulegen, um eine Sollströmungsrate des gemischten Stroms zu erreichen,

wobei eine beliebige Differenz zwischen einer tatsächlichen Temperatur des gemischten Stroms und der Solltemperatur innerhalb eines bestimmten Bereichs gehalten wird.

2. Elektronischer Haushaltsmischventilwasserhahn nach Anspruch 1, wobei die Steuerung ausgelegt ist, um die angetriebenen Ventile (14A, 14B) basierend auf den Temperaturinformationen und den tatsächlichen Druckdifferenzen zu steuern, wodurch eine Differenz zwischen einer tatsächlichen Strömungsrate des gemischten Stroms und der Sollströmungsrate innerhalb eines zweiten bestimmten Bereichs gehalten wird.

3. Elektronischer Haushaltsmischventilwasserhahn nach Anspruch 1 oder Anspruch 2, wobei der weitere Drucksensor (13A) zwischen dem ersten angetriebenen Ventil (14A) und der Verbindungsstelle (3) angeordnet ist.

4. Elektronischer Haushaltsmischventilwasserhahn nach Anspruch 1 oder Anspruch 2, wobei der weitere Drucksensor (13B) zwischen dem zweiten angetriebenen Ventil (14B) und der Verbindungsstelle (3) angeordnet ist.

5. Elektronischer Haushaltsmischventilwasserhahn nach Anspruch 1 oder Anspruch 2, wobei der erste Drucksensor ein erster Differenzdrucksensor ist, der die erste Komponente (12A) des ersten Drucksensors und die zusätzliche Komponente (13A) des weiteren Drucksensors beinhaltet.

6. Elektronischer Haushaltsmischventilwasserhahn nach Anspruch 1 oder Anspruch 2, wobei der zweite Drucksensor ein zweiter Differenzdrucksensor ist, der die erste Komponente (12B) des zweiten Drucksensors und die zusätzliche Komponente (13B) des weiteren Drucksensors beinhaltet.

7. Elektronischer Haushaltsmischventilwasserhahn nach Anspruch 1 oder Anspruch 2, wobei die Steuerung zumindest einen Treiber (24) beinhaltet, der ausgelegt ist, um die angetriebenen Ventile anzutreiben.

8. Elektronischer Haushaltsmischventilwasserhahn nach Anspruch 1 oder Anspruch 2, ferner umfassend ein Mensch-Maschine-Schnittstellen-(MMI-)Modul (28), das mit der Steuerung wirkverbunden ist.

9. Elektronischer Haushaltsmischventilwasserhahn nach Anspruch 1 oder Anspruch 2, wobei zumindest eines der angetriebenen Ventile (14A, 14B) durch einen Schrittmotor angetrieben wird, und wobei die Anordnung (15A, 15B) einen Zähler beinhaltet, der mit dem Schrittmotor verbunden ist, wobei der Zähler ausgelegt ist, um eine Anzahl an Schritten des Schrittmotors zu zählen, und wobei die Steuerung ausgelegt ist, um die Anzahl an Schritten zu verwenden, um das Ausmaß der Öffnung von zumindest einem der angetriebenen Ventile zu bestimmen.

10. Elektronischer Haushaltsmischventilwasserhahn nach Anspruch 1 oder Anspruch 2, ferner umfassend einen dritten Temperatursensor (17), der stromabwärts von der Verbindungsstelle (3) angeordnet ist.

11. Elektronischer Haushaltsmischventilwasserhahn nach Anspruch 10, wobei die Steuerung ausgelegt ist, um das erforderliche Ausmaß an Öffnungen basierend auf einer Eingabe von dem dritten Temperatursensor (17) zu modifizieren.

12. Elektronischer Haushaltsmischventilwasserhahn nach Anspruch 10 oder Anspruch 11, wobei die Steuerung ausgelegt ist, um die angetriebenen Ventile basierend auf einem Vorwärtssteuerschema und einem Rückwärtssteuerschema zu steuern, wobei das Vorwärtssteuerschema und das Rückwärtssteuerschema zumindest teilweise parallel arbeiten.

13. Elektronischer Haushaltsmischventilwasserhahn nach Anspruch 1 oder Anspruch 2, wobei die Steuerung ausgelegt ist, um die angetriebenen Ventile basierend auf den Temperaturinformationen und den tatsächlichen Druckdifferenzen zu steuern, wodurch eine tatsächliche Strömungsrate des gemischten Stroms über 20 l/Min. gehalten wird und ein Druck des gemischten Stroms zumindest 0,5 bar beträgt.

**Revendications**

1. Robinet mélangeur électronique domestique (50) destiné à commander la température d'un flux mélangé se déversant du robinet, le robinet comprenant :

(a) un corps de robinet comprenant :

(i) une entrée d'eau chaude (1), adaptée pour se raccorder à une source d'eau chaude, et raccordée fluidiquement à une voie d'écoulement d'eau chaude (8) ; et
(ii) une entrée d'eau froide (2), adaptée pour se raccorder à une source d'eau froide, et raccordée fluidiquement à une voie d'écoulement d'eau froide (18), lesdites entrées se raccordant fluidiquement au niveau d'une jonction (3) sur ledit corps de robinet ;
et
(iii) une sortie de robinet (4), adaptée pour délivrer le flux mélangé reçu en provenance desdits voies d'écoulement d'eau (8, 18), par l'intermédiaire de ladite jonction (3) ;

(b) un dispositif de commande (22) ;

(c) une première soupape motorisée (14A) raccordée fluidiquement à ladite voie d'écoulement d'eau chaude (8), ladite première soupape (14A) réagissant audit dispositif de commande (22) ;

(d) une seconde soupape motorisée (14B) raccordée fluidiquement à ladite voie d'écoulement d'eau froide (18), ladite seconde soupape (14B) réagissant audit dispositif de commande ;

(e) au moins un agencement (15A, 15B) adapté pour déterminer une étendue d'ouverture de ladite première soupape motorisée et une étendue d'ouverture de ladite seconde soupape motorisée ;

(f) un premier capteur de température (10A) et un deuxième capteur de température (10B), lesdits capteurs étant associés audit corps de robinet pour détecter, respectivement, une première température de fluide dans ladite voie d'écoulement d'eau chaude, en amont de ladite première soupape motorisée (14A) et une seconde température de fluide dans de ladite voie d'écoulement d'eau froide (18), en amont de ladite seconde soupape motorisée (14B) ;

(g) au moins un premier composant d'un premier capteur de pression (12A) et au moins un premier composant d'un second capteur de pression (12B), lesdits composants (12A, 12B) desdits capteurs étant associés audit corps de robinet, ledit premier composant dudit premier capteur servant à détecter la pression de fluide dans ladite voie d'écoulement d'eau chaude (8), en amont de ladite première soupape motorisée (14A), ledit composant (12B) dudit second capteur servant à détecter la pression de fluide dans ladite voie d'écoulement d'eau froide (18), en amont de ladite seconde soupape motorisée (14B) ; et

(h) au moins un composant supplémentaire d'un autre capteur de pression (16 ; 13A, 13B), ledit composant étant disposé en aval par rapport auxdites soupapes motorisées (14A, 14B), ledit dispositif de commande étant adapté pour recevoir :

des informations, en provenance dudit agencement (15A, 15B), concernant ladite étendue d'ouverture de chacune desdites soupapes motorisées ;

des informations de température en provenance desdits capteurs de température (10A, 10B) ; et

des informations de pression en provenance de tous lesdits capteurs de pression (12A, 12B, 13A, 13B, 16)

**caractérisé en ce que**

ledit dispositif de commande (22) possède une relation calibrée reliant un débit de fluide à travers ladite voie d'écoulement d'eau chaude (8) à ladite étendue d'ouverture de ladite première soupape motorisée (14A), en fonction d'une première différence de pression, et une relation étalonnée relative à un débit de fluide à travers ladite voie d'écoulement d'eau froide (18) jusqu'à ladite étendue d'ouverture de ladite seconde soupape motorisée (14B), en fonction d'une seconde différence de pression,

durant le fonctionnement du robinet mélangeur électronique domestique, ledit dispositif de commande est adapté pour obtenir, sur la base desdites informations de pression, une première différence de pression réelle entre une pression dudit fluide dans ladite voie d'écoulement d'eau chaude et une pression en aval de ladite première soupape, et une seconde différence de pression réelle entre une pression dudit fluide dans ladite voie d'écoulement d'eau froide et une pression en aval de ladite seconde soupape, et ledit dispositif de commande est en outre adapté

(i) pour commander auxdites soupapes de régler l'étendue de l'ouverture de chaque soupape, sur la base desdites informations de température et en fonction des différences de pression réelles à l'aide desdites relations étalonnées pour atteindre une température de consigne du flux mélangé, et

(ii) pour commander auxdites soupapes de régler l'étendue d'ouverture de chaque soupape, sur la base desdites informations de température et en fonction des différences de pression réelles pour obtenir un débit de consigne du flux mélangé, toute différence entre une température réelle du flux mélangé et ladite température de consigne, étant maintenue dans une plage particulière.

2. Robinet mélangeur électronique domestique selon la revendication 1, ledit dispositif de commande étant adapté pour commander lesdites soupapes motorisées (14A, 14B) sur la base desdites informations de température et desdites différences de pression réelles, moyennant quoi une différence entre un débit réel du flux mélangé et ledit débit de consigne, est maintenue dans une seconde plage particulière.

3. Robinet mélangeur électronique domestique selon la revendication 1 ou la revendication 2, ledit autre capteur de pression (13A) étant disposé entre ladite première soupape motorisée (14A) et ladite jonction (3).

4. Robinet mélangeur électronique domestique selon la revendication 1 ou la revendication 2, ledit autre capteur de pression (13B) étant disposé entre ladite seconde soupape motorisée (14B) et ladite jonction (3).

**5.** Robinet mélangeur électronique domestique selon la revendication 1 ou la revendication 2, ledit premier capteur de pression étant un premier capteur de pression différentielle comprenant ledit premier composant (12A) dudit premier capteur de pression et ledit composant supplémentaire (13A) dudit autre capteur de pression.

**6.** Robinet mélangeur électronique domestique selon la revendication 1 ou la revendication 2, ledit second capteur de pression étant un second capteur de pression différentielle comprenant ledit premier composant (12B) dudit second capteur de pression et ledit composant supplémentaire (13B) dudit autre capteur de pression.

**7.** Robinet mélangeur électronique domestique selon la revendication 1 ou la revendication 2, ledit dispositif de commande
comprenant au moins un dispositif d'entraînement (24) adapté pour entraîner lesdites soupapes motorisées.

**8.** Robinet mélangeur électronique domestique selon la revendication 1 ou la revendication 2, comprenant en outre un un module d'interface homme-machine (MMI) (28) raccordé fonctionnellement audit dispositif de commande.

**9.** Robinet mélangeur électronique domestique selon la revendication 1 ou la revendication 2, au moins l'une desdites soupapes motorisées (14A, 14B) étant entraînées par un moteur pas à pas, et ledit agencement (15A, 15B) comprenant un compteur associé audit moteur pas à pas, ledit compteur étant adapté pour compter un nombre de pas dudit moteur pas à pas, et ledit dispositif de commande étant adapté pour utiliser ledit nombre de pas pour déterminer ladite étendue d'ouverture d'au moins l'une desdites soupapes motorisées.

**10.** Robinet mélangeur électronique domestique selon la revendication 1 ou la revendication 2, comprenant en outre un troisième capteur de température (17), disposé en aval de ladite jonction (3).

**11.** Robinet mélangeur électronique domestique selon la revendication 10,
ledit dispositif de commande étant adapté pour modifier ladite étendue requise des ouvertures sur la base d'une entrée provenant dudit troisième capteur de température (17).

**12.** Robinet mélangeur électronique domestique selon la revendication 10 ou la revendication 11, ledit dispositif de commande étant adapté pour commander lesdites soupapes motorisées sur la base d'un schéma de commande à correction aval et d'un schéma de commande de retour, ledit schéma de commande d'avance et ledit schéma de commande à rétroaction fonctionnant au moins partiellement en parallèle.

**13.** Robinet mélangeur électronique domestique selon
la revendication 1 ou la revendication 2, ledit dispositif de commande étant adapté pour commander lesdites soupapes motorisées sur la base desdites informations de température et desdites différences de pression réelles, moyennant quoi un débit réel du flux mélangé est maintenu supérieur à 20 l/ min et une pression du flux mélangé est supérieure ou égale à 0,5 bar.

**Figure 1**

**Figure 2**

**Figure 3**

211
212
213
216
214
2151
215
2121
2152
210

**Figure 4**

**Figure 5A**

**Figure 5B**

**Figure 5C**

**Figure 5D**

**Figure 6**

EP 2 681 472 B1

**Figure 7**

EP 2 681 472 B1

**Figure 8**

EP 2 681 472 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4756030 A
- DE I0241303
- US 20060231638 A
- US 4694512 A